# EUROPÄISCHE PATENTANMELDUNG

(11) **EP 1 507 072 A2**
(43) Veröffentlichungstag der Anmeldung: **16.02.2005**
(21) Anmeldenummer: 04018415.2
(22) Anmeldetag: 04.08.2004
(51) Int. Cl.: F01N 3/022, F01N 7/08

(54) **Abgasführende Vorrichtung eines Verbrennungsmotors mit poröser Auskleidung**

(30) Priorität: 13.08.2003 DE 10337156
(71) Anmelder: DaimlerChrysler AG, 70567 Stuttgart (DE)
(72) Erfinder: Baur, Hartmut, 88521 Ertingen (DE); Holder, Eberhard, 73730 Esslingen (DE); Musiol, Johanna, 89075 Ulm (DE)

(57) **Zusammenfassung**

Abgasführende Vorrichtung eines Verbrennungsmotors mit innenliegender metallischer und/oder keramischer poröser Auskleidung, wobei die poröse Auskleidung einen Gradienten der aktiven Oberfläche und/oder einen Gradienten des durch Makroporen gebildeten Porenvolumens aufweist, der von außen nach innen ab- oder zunimmt, sowie Verfahren zur Herstellung einer abgasführenden Vorrichtung eines Verbrennungsmotors, mit den Schritten Herstellung eines gradierten porösen Formkerns und Umgießen dieses Formkerns mit flüssigem Metall, oder Übereinanderschichten mehrerer Materialschichten aus Metallschaum, Metallschwamm und/oder poröser Keramik um eine zentrale Achse unter Bildung eines Porositätsgradienten, nachfolgend Verbinden der einzelnen Materialschichten und Befestigen des gebildeten porösen Formkörpers durch Kleben oder Schweißen in einem Abgasrohr, oder Übereinanderschichten mehrerer Lagen aus Metallschaum, Metallschwamm und/oder poröser Keramik um eine zentrale Achse unter Bildung eines Porositätsgradienten, Versiegeln der äußersten Lagen mit einer Metallfolie, Metallband oder mit Sintermetallschlickeroder paste, Versintern und Ausbildung einer dichten metallischen Außenfläche und abschließend Befestigung des porösen Formkörpers durch Kleben oder Schweißen in einem Abgasrohr.

## Beschreibung

Die Erfindung betrifft eine abgasführende Vorrichtung, eines Verbrennungsmotors, insbesondere einen Abgaskrümmer, der mit einer metallischen und/oder keramischen porösen Auskleidung versehen ist, sowie Verfahren die abgasführende Vorrichtung mit poröser Auskleidung zu fertigen.

Die stetige Verschärfung der Schadstoffemissionen von Kraftfahrzeugen verlangt eine ständige Verbesserung der Abgasnachbehandlung. Besondere Aufmerksamkeit wird dabei der Abgasreinigung in der Kaltstartphase geschenkt. Unmittelbar nach dem Start werden dabei verhältnismäßig große Mengen an unverbrannten Kohlenwasserstoffen emittiert. Der Grund dafür ist die noch nicht erreichte Betriebstemperatur (Light-Off-Temperatur) des Katalysators, wodurch nur eine unzureichende Umsetzung der Kohlenwasserstoffe gewährleistet wird. Üblicherweise erreicht der Katalysator nach dem Start des Motors erst nach einigen Minuten durch die Abwärme des Abgasstroms die Light-Off-Temperatur, so dass die katalytische Umsetzung des Abgases beginnt.

In der DE 100 48 286 A1 wird vorgeschlagen, zumindest einen Teil der unverbrannten Kohlenwasserstoffe zwischenzuspeichern. Hierzu wird ein gasführender Leitungsabschnitt auf seiner Innenwand mit einem adsorptiv wirkenden Material, vorzugsweise auf Zeolith-Basis, beschichtet. Diese Beschichtung adsorbiert beim Kaltstart einen Teil der unverbrannten Kohlenwasserstoffe und gibt diese bei höheren Temperaturen wieder ab. Diese Beschichtung des Abgaskrümmers ist schon in der Kaltstartphase Abgasen mit Temperaturen von bis zu 1050°C ausgesetzt. Dieses hat den Nachteil, dass die Beschichtung sich sehr schnell auf die Desorptionstemperatur aufheizt und somit nur wenig Kohlenwasserstoffe für die Zeit der Aufheizung des Katalysators auf die Light-Off-Temperatur zwischengespeichert werden können. Ferner werden hohe mechanische Ansprüche an die direkt auf die Innenwand des Abgaskrümmers aufgebrachte Beschichtung gestellt. Sie muss hohen Temperaturschwankungen und thermischen Spannungen, die sich durch die unterschiedlichen thermischen Ausdehnungen von Keramik und Metall ergeben, standhalten, ohne dass Teile der Beschichtung abplatzen und stromab in den Katalysator gelangen.

Ein weiterer Ansatz ist es, formstabile poröse Einlagen, typischerweise hochtemperaturbeständige keramische Sinterformkörper, in den Leitungsabschnitt einzulegen bzw. einzukleben. Diese Einlagen haben eine bessere Formstabilität und eine hinsichtlich leicht kondensierbaren Gasbestandteilen absorbierende und/oder adsorbierende Wirkung. Ein Nachteil dieses Systems liegt in der unangepassten Wärmeübertragung beziehungsweise Wärmeableitung begründet. Die porösen Einlagen stellen im allgemeinen sehr wirksame Wärmeisolatoren dar, so dass das Abgas nur noch schwach über die Oberflächen der abgasführenden Vorrichtung gekühlt wird. Dies ist zwar während der Startphase vorteilhaft, da der Katalysator schneller auf die Light-Off-Temperatur gebracht wird, doch im Dauerbetrieb führt diese Wärmeisolierung zu einem hohen Wärmeeintrag in den Katalysator mit der Gefahr der Überhitzung des Katalysatormaterials.

Da die bekannten porösen Sinterformkörper als Einlage für abgasführende Vorrichtungen oder -leitungen in der Regel nur eine geringe mechanische Festigkeit aufweisen, muss das Leitungsmaterial im wesentlichen die gesamte Strukturfunktion übernehmen, so dass sich die Konstruktion der Leitung hier gegenüber der Vorrichtung ohne Einlagen nicht leichter auslegen lässt. Diese Gewichtszunahme des Gesamtsystems der gasführenden Leitung stellt einen Nachteil im Sinne des angestrebten Leichtbaus dar.

Der vorliegenden Erfindung liegt daher die Aufgabe zugrunde, eine abgasführende Vorrichtung zu schaffen, welche eine verbesserte Speicherkapazität für leicht kondensierbare Gasbestandteile, sowie einen an Start- und Dauerbetriebsphase angepassten Wärmehaushalt aufweist, wobei das Gewicht des gesamten Abgasleitsystems höchstens geringfügig erhöht werden darf.

Die Aufgabe wird gelöst durch abgasführende Vorrichtungen von Verbrennungsmotoren mit innenliegender metallischer und/oder keramischer poröser Auskleidung mit den kennzeichnenden Teilen der Ansprüche 1 und 2, sowie Verfahren zur Herstellung von abgasführenden Vorrichtungen von Verbrennungsmotoren mit den kennzeichnenden Teilen der Ansprüche 15, 16 und 17.

Erfindungsgemäß ist in einer ersten Ausgestaltung der Erfindung eine abgasführende Vorrichtung eines Verbrennungsmotors mit innenliegender metallischer und/oder keramischer poröser Auskleidung vorgesehen, welche einen Gradienten der aktiven Oberfläche aufweist, so dass die aktive Oberfläche von außen (der Oberfläche der abgasführenden Vorrichtung zugewandt) nach innen (der Mittelachse der abgasführenden Vorrichtung zugewandt) abnimmt oder zunimmt. Unter aktiver Oberfläche ist dabei die Oberfläche zu verstehen, welche adsorptiv oder absorptiv auf die leicht kondensierbaren Gasbestandteile, wie beispielsweise niedere Kohlenwasserstoffe (CHx), wirkt. Die aktive Oberfläche umfasst somit sowohl äußere wie auch innere Oberfläche der Auskleidung. Insbesondere im Falle von Mikroporosität wird häufig von innerer Oberfläche gesprochen.

Bevorzugt zeigt die poröse Auskleidung zusätzlich einen Gradienten des durch Makroporen gebildeten Porenvolumens in der Weise auf, dass das durch Makroporen gebildete Porenvolumen von außen nach innen zunimmt oder abnimmt.
Je nach gesamter Porenverteilung ist die Grenze zwischen Makro- zu Mikroporen nicht scharf festlegbar, sondern fließend. Im Sinne der Erfindung sind Poren mit Porendurchmessern unterhalb von ca. 10 µm den Mikroporen zuzuordnen und Poren mit Porendurchmessern oberhalb ca. 100 µm den Makroporen zuzuordnen. Der Größenbereich der Makroporen liegt in der erfindungsgemäßen Auskleidung bevorzugt zwischen 100 µm und 3 mm.

Erfindungsgemäß sind die Gradienten so ausgelegt, dass sich das Porenvolumen der Makroporen und/oder die aktive Oberfläche im Mittel über die gesamte Länge des Gradienten um mindestens 20% ändert.

Es ist vorgesehen diese Gradienten der porösen Auskleidung so zu schaffen, dass mindestens zwei Materialschichten mit unterschiedlicher Porosität und/oder Porengrößenverteilung, übereinander angeordnet sind, wobei eine Gradierung von hohen zu niedrigen Porendurchmessern von innen nach außen oder in umgekehrter Richtung vorliegt. In der Regel weist die erfindungsgemäße poröse Auskleidung mehrere hinsichtlich Porosität und/oder Porengrößenverteilung deutlich unterscheidbare Materialschichten auf. Bevorzugt sind drei bis 5 dieser Materialschichten. Ebenso ist es aber auch möglich, dass sich Porosität und/oder Porengrößenverteilung kontinuierlich verändern.

In einer bevorzugten Ausgestaltung der Erfindung ist vorgesehen, dass die poröse Auskleidung eine außenliegende Materialschicht aufweist, die frei von Makroporen ist, und ein Dicke von mindestens 0,2 mm aufweist.

Die Materialschichten sind entweder miteinander fest verbunden, was beispielsweise durch Kleben, Sintern, Schweißen, Löten, Klammern oder anderweitige mechanische Befestigungsmittel erfolgen kann, oder aufgrund der genauen Passform fest aneinandergefügt.
In einer Ausgestaltung der Erfindung sind so beispielsweise mehrere Materialschichten in einer der Abgasleitungsgeometrie angepassten schalenförmigen Geometrie passgenau ineinander abgelegt, sodass sie sich gegenseitig und gegenüber der abgasführenden Vorrichtung abstützen.

Dabei ist es insbesondere auch möglich, dass außen eine geschlossene, das heißt im wesentlichen keine offenen, oder durchgängigen Poren mehr aufweisende Materialschicht vorliegt. Eine wesentliche Eigenschaft dieser Materialschicht ist, dass sie gasdicht ist, so dass sie den Gasraum der inneren porösen Auskleidung nach außen hin abschließt.

In einer weiteren Ausführung ist die Innenwand der abgasführenden Vorrichtung und die poröse Auskleidung in stoff- und formschlüssigem Kontakt, wobei eine Übergangsschicht gebildet wird, in der die Poren der porösen Auskleidung teilweise durch das Material der Innenwand der abgasführenden Vorrichtung gefüllt sind. Das Material der porösen Auskleidung geht quasi über eine Verbindungsschicht aus Durchdringungsgefüge in das Material der abgasführenden Vorrichtung über.

Entsprechend den unterschiedlichen Porengrößen der gradierten porösen Auskleidung weist das Skelett der porösen Struktur auch unterschiedliche Wandstärken auf. Bevorzugt nimmt die Wandstärke des Skeletts der porösen Struktur nach außen hin zu.

Das Skelett-Material kann dicht oder auch mikroporös ausgestaltet sein. Liegt im Skelett-Material eine Mikroporosität, insbesondere mit offenen Porenkanälen vor, so wird hierdurch gegenüber einer geschlossenporigen Variante eine erheblich höhere aktive Oberfläche erreicht. Bevorzugt weist das Skelettmaterial der Makroporen eine hohe inneren Oberfläche respektive eine offene Mikroporosität auf.

Einer der Vorteile der porösen Auskleidung ist, dass die Außenstruktur deutlich höhere Steifigkeit aufweist als ein nicht gradiertes Material. Dies gilt insbesondere bei geschlossener Oberfläche auf der Außenseite der porösen Auskleidung. Dadurch kann die Wandstärke der abgasführenden Vorrichtung, beispielsweise ein Blechkrümmer eines Kraftfahrzeugmotors, reduziert werden.
Hierdurch wird es auch möglich eine luftspaltisolierte abgasführende Leitung, insbesondere einen luftspaltisolierten Krümmer zu erhalten, indem die Innenschale der porösen Auskleidung mit einer geschlossenen Außenoberfläche versehen ist. Zwischen dieser geschlossenen Außenoberfläche und der Innenseite der abgasführenden Leitung ist hierbei zumindest teilweise ein Luftspalt, der typischerweise einige Millimeter Dicke aufweist, angeordnet. Durch die Wärmeisolation des Luftspalts kann in vorteilhafter Weise eine Verbesserung der Kaltstarteigenschaften des Verbrennungsmotors erreicht werden. Auf eine gesonderte Vorrichtung eines luftspaltisolierten Krümmers kann verzichtet werden, was sich u. a. günstig auf das Gewicht auswirkt.

Die gradierte Struktur hat ferner den Vorteil, dass im zentralen Bereich der abgasführenden Vorrichtung überwiegend makroporöses Material vorliegt, und daher die Strömung des Abgases nur wenig verändert wird. Es ist somit möglich die Porengröße von innen nach außen gradiert zu verringern, ohne die Strömung wesentlich zu verändern. Somit findet auch nur wenig unerwünschte Rückvermischung der Abgase statt.

Auch das gradierte Material zeigt eine sehr gute schalldämmende Wirkung. Je höher die offene Porosität ist, also Porosität die Gase aufnehmen kann, umso mehr Schall wird absorbiert.

Die in Frage kommenden porösen Strukturen können metallischer sowie keramischer Natur sein.
Es ist insbesondere auch möglich unterschiedlich zusammengesetzte Metalle und oder Keramiken zu kombinieren. Zu den gut geeigneten Legierungen zählen die hochtemperaturund oxidationsbeständigen Legierungen auf der Basis von Ni, NiCr und/oder NiCrAl, sowie hochlegierte Stähle. Zu den gut geeigneten Keramiken zählen refraktäre Oxide, wie beispielsweise Al₂O₃, ZrO₂, Schamotte und dergleichen, sowie SiC, oder Si₃N₄.

Eine bevorzugte Variante einer porösen metallischen Auskleidung weist eine Kombination aus zwei unterschiedlichen Metalllegierungen auf, wobei die erste aus einer Nickelhaltigen Legierung und die zweite aus einer katalytisch aktiven Edelmetall-haltigen Legierung besteht.

Eine weitere bevorzugte metallische Variante umfasst zwei Metalle, beziehungsweise Legierungen, die einen starken Unterschied in der Wärmeleitfähigkeit aufweisen.

Für gemischte Strukturen aus keramischen und metallischen Materialschichten ist es von Vorteil, die keramischen Schichten auf der Außenseite der porösen Auskleidung, oder beidseitig von metallischen Schichten umgeben anzuordnen. Hierdurch kann verhindert werden, dass abgelöstes feines keramische Material in den Gasstrom gelangt.

Eine weitere Ausführung der abgasführenden Vorrichtung sieht vor, dass die einzelnen Lagen der porösen Auskleidung zusätzlich mit einem speziellen Absorptionsmittel beschichtet werden. Dabei kann es sich insbesondere um metallische und keramische Beschichtungen mit hoher aktiver Oberfläche handeln. Bevorzugte Absorptionsmittel stellen Zeolithe dar.
Dabei können alle oder nur eine oder mehrere bevorzugte Materialschichten zusätzlich beschichtet werden. In Varianten mit metallischen Strukturen, die mittels keramischem Absorptionsmittel beschichtet sind, ist bevorzugt zumindest die innerste Materialschicht der porösen Auskleidung aus unbeschichtetem Metall gebildet.

Ein Vorteil dieser gradierten und kombinierten Bauweise ergibt sich daraus, dass die außenliegenden Schichten durch die weiter innen liegenden Materialschichten zumindest in der Startphase, beziehungsweise Kaltstartphase eines Verbrennungsmotors, thermisch abgeschirmt werden. Dadurch wird die Temperaturerhöhung im Außenbereich verzögert und die Adsorptionswirkung in diesem Bereich länger aufrecht erhalten. So wird es beispielsweise im Abgasstrom eines Kraftfahrzeugs möglich, die Absorptionswirkung von porösem Zeolith, oder zeolithbeschichtetem Material annährend bis zum Erreichen der KAT-Light-Off-Temperatur (Starttemperatur des Katalysators)zu gewährleisten.

Diese Gradierung von Aufbau und Material der porösen Auskleidung, insbesondere in Verbindung mit den kombinierten Materialien, wird bevorzugt so eingestellt, dass Wärmeleitfähigkeit, Wärmeübertragung und Wärmekapazität in der Startphase zu einer minimalen Selbsterwärmung und einer maximalen Aufheizung des Katalysators bis zur KAT-Light-Off-Temperatur führen. Hierdurch wird ein hohe Speicherkapazität für leichtkondensierbare Abgasbestandteile, insbesondere CHx und frühe Verfügbarkeit des Katalysators gewährleistet.

Während des Betriebs heizt die poröse Auskleidung durch und gibt die adsorbierten Stoffe wieder frei, so dass diese durch den Katalysator, dessen Temperatur nun über der KAT-Light-Off-Temperatur liegt, katalytisch zersetzt werden. Die Auskleidung gibt dann überschüssige Wärme über die Oberfläche der abgasführenden Vorrichtung ab, so dass eine mögliche Überhitzung des Katalysators vermieden werden kann.

Die poröse Auskleidung wird erfindungsgemäß durch Fasergebilde, wie Gewebe, Gestricke oder Gewirre, sowie Metallspäne, Metalldrähte, Metallpulver, Schäume oder Schwämme gebildet. Weitere erfindungsgemäße Ausführungen sehen auch Formkörper, Gelege oder Schüttungen von Hohlkugeln vor. Die unterschiedlichen Formen können auch in geeigneter weise kombiniert werden.

Ein weiterer Aspekt der Erfindung betrifft Verfahren zur Herstellung einer abgasführenden Vorrichtung eines Verbrennungsmotors mit poröser Auskleidung.

Eine erste Ausgestaltung der Erfindung umfasst hierbei als wesentliche Schritte
- die Herstellung eines porösen Formkerns, der einen Porositätsgradienten der mittleren Porengröße und der mittleren Porosität aufweist
- das Umgießen des porösen Formkerns mit flüssigem Metall
- Ausbildung einer metallischen Außenfläche, die den porösen Formkern zum überwiegenden Teil gasdicht abschließt.
Das Umgussmaterial bildet in dieser Variante die Außenfläche bzw. den Mantel der abgasführenden Vorrichtung. Im Gießprozess wird die poröse Auskleidung als Gießkern verstanden, der in eine Gießform eingelegt wird. Dadurch erreicht man einen nahtlosen Übergang der Auskleidung zur Wand des Leitungsabschnitts. Bei dieser Prozessvariante wird zwischen der Innenwand der abgasführenden Vorrichtung und der porösen Auskleidung eine Übergangsschicht gebildet, in der die Poren der porösen Auskleidung teilweise durch das Material der Innenwand der abgasführenden Vorrichtung gefüllt sind. Durch diese Verbindung ist es sogar möglich die Wanddicke des Gussteils, bzw. der abgasführenden Vorrichtung, zu reduzieren, da die Auskleidung als Versteifungselement wirkt.

Diese Vorgehensweise hat den Vorteil, dass eine Form- und kraftschlüssige Verbindung zwischen der porösen Auskleidung und der sie umgebenden abgasführenden Vorrichtung gebildet wird. Des weiteren können die Prozessschritte zur separaten Fertigung der abgasführenden Vorrichtung, beispielsweise der Krümmer eines Verbrennungsmotors und des Einpassens und Befestigens der porösen Auskleidung in vorteilhafter Weise eingespart werden.
Bevorzugten Materialkombinationen sind eine Stahl-Legierung für die Abgasführende Vorrichtung und einer hochschmelzende Metalllegierung für die poröse Auskleidung.

In einer zweiten Prozessvariante zur Herstellung einer abgasführenden Vorrichtung eines Verbrennungsmotors mit poröser Auskleidung sind zumindest die folgenden wesentlichen Schritte vorgesehen:
- Übereinanderschichten mehrerer Materialschichten aus Metallschaum, Metallschwamm und/oder einem Formkörper aus poröser Keramik um eine zentrale Achse, wobei die inneren Lagen eine höhere Porosität aufweisen als die äußeren Lagen oder umgekehrt
- Verbinden der einzelnen Materialschichten durch Löten oder Schweißen, oder Diffusionsschweißen zu einem porösen Formkörper
- Befestigung des porösen Formkörpers durch Kleben oder Schweißen in einem Abgasrohr, insbesondere einem Abgaskrümmer.
   Bei dieser Prozessvariante ist im Gegensatz zur ersten ausgeführten Prozessvariante des Umgusses eine wesentlich höhere Materialvielfalt für die poröse Auskleidung gegebenen. Bei der Variante, den porösen Formkörper durch Kleben im Abgasrohr zu befestigen, kann die Kleberschicht auch als mechanische Pufferschicht zum Ausgleich nicht angepasster thermischer Ausdehnungskoeffizienten von Abgasrohr und Auskleidung genutzt werden.

In einer dritten Prozessvariante zur Herstellung einer abgasführenden Vorrichtung eines Verbrennungsmotors mit poröser Auskleidung sind zumindest die folgenden wesentlichen Schritte vorgesehen:
- Übereinanderschichten mehrerer Lagen aus Metallschaum, Metallschwamm und/oder poröser Keramik um eine zentrale Achse, wobei die inneren Lagen eine höhere Porosität aufweisen als die äußeren Lagen oder umgekehrt
- Versigeln der äußersten Lagen mit einer Metallfolie, Metallband oder mit Sintermetallschlicker oder -paste
- Versinterung und Ausbildung einer metallischen Außenfläche, die den porösen Formkern zum überwiegenden Teil gasdicht abschließt.
- Befestigung des porösen Formkörpers durch Kleben oder Schweißen in einem Abgasrohr, insbesondere Abgaskrümmer.
Bei dieser Prozessvariante wird ein poröser Formkern zur Verwendung als poröse Auskleidung eines Abgasrohr gebildet, der auf seiner Außenseite gasdicht abgeschlossen ist. Bevorzugt wird ein solcher Formkern so in die abgasführende Vorrichtung eingesetzt, dass zwischen der Außenwand der porösen Auskleidung und der Innenwand der abgasführenden Vorrichtung zumindest teilweise ein Luftspalt ausgebildet ist. Besonders bevorzugt ist dann überwiegende Teil der Außenwand der porösen Auskleidung durch einen Luftspalt von der Innenwand der gasführenden Vorrichtung getrennt.

Die mechanischen Verbindung zwischen der porösen Auskleidung und der abgasführenden Vorrichtung kann über metallische oder keramische Abstandshalter erfolgen, die beispielsweise eingeklebt oder verschweißt werden.

In den folgenden Zeichnungen sind schematisch mögliche Ausgestaltungen der Erfindung dargestellt. Die Abbildungen sollen das Prinzip der Erfindung näher erläutern und sind keinesfalls einschränkend auszulegen.

Dabei zeigt:
**Fig. 1** die schematische Darstellung eines Abgaskrümmers mit abgasführender Leitung (1), die die Schnitte II und IV aufzeigt
**Fig. 2** eine im Querschnitt in der Position II dargestellte, abgasführende Leitung mit einer porösen Auskleidung (2), im direkten Kontakt mit der Wand der abgasführenden Leitung (6)
**Fig. 3** einen vergrößert dargestellten Ausschnitt (III) der Auskleidung aus Fig. 2 mit einer gradierten porösen Struktur, aufweisend Makroporen (3) unterschiedlicher Größe, und Stegmaterial (4) unterschiedlicher Dicke, sowie die Wand der abgasführenden Leitung (6)
**Fig. 4** eine im Querschnitt an Position IV-IV dargestellte, luftspaltisolierte abgasführende Leitung mit einer porösen Auskleidung (2), einem Luftspalt (7), der Wand der abgasführenden Leitung (6), Verbindungs-Bereich(8), und Nahtstelle (5)
**Fig. 5** einen vergrößert dargestellten Ausschnitt V der Fig. 4 mit poröser Auskleidung (2) und gasdichter Materialschicht (9)

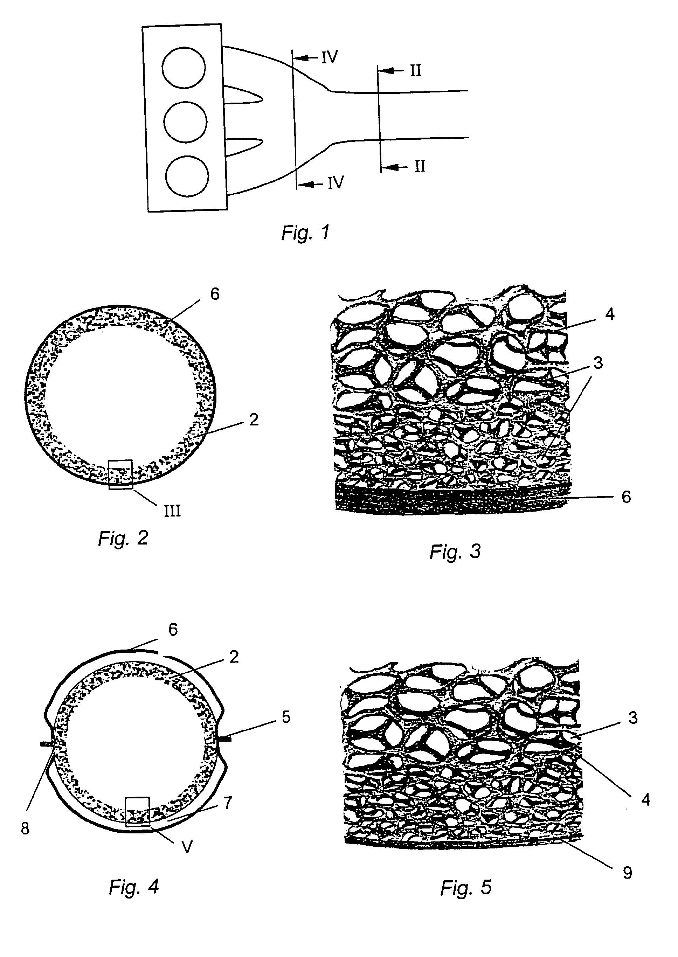

In Fig. 1 ist ein Abgaskrümmer einer Verbrennungsmaschine dargestellt. In der vorliegenden Ausführung handelt es sich um einen Abgaskrümmer einer 3-Zylinderbank einer Verbrennungsmaschine in V-Bauweise. Es ist selbstverständlich dass die Erfindung auch auf andere Bauformen, wie z. B. auf Abgaskrümmer von Brennkraftmaschinen in Reihenbauweise angewandt werden kann. Ferner kommen im Rahmen dieser Erfindung alle bekannten Geometrien des Abgaskrümmers in Frage, wie z.B. das Abgassammelgehäuse oder einzelne Gasleitungen, die von den jeweiligen Brennräumen ausgehen.

Fig. 2 zeigt einen Querschnitt einer abgasführenden Leitung mit einer porösen Auskleidung, die in Fig. 3 vergrößert dargestellt ist. Der Aufbau der porösen Schicht (2) ist hierbei an einem offenporigen Metallschaum dargestellt. Bei diesem Beispiel handelt es sich um eine Struktur, bei der die Gradierung aufgrund von zwei Schichten mit unterschiedlichen Porendurchmessern der Makroporen (3) zustande kommt. Diese zwei Schichten gehen hierbei nahtlos ineinander über.

In Fig. 4 ist beispielhaft eine luftspaltisolierte, abgasführende Leitung im Querschnitt dargestellt. Die äußere Hülle besteht aus zwei Blechhalbschalen, deren Nahtstellen (5) verschweißt werden. Die innere Struktur besteht aus einem porösen Körper, der nach außen hin eine geschlossene Oberfläche aufweist. Diese innere Struktur kann aus einem Stück gefertigt werden und anschließend an der äußeren Hülle befestigt, z.B. verschweißt werden. Sie kann jedoch auch aus zwei Halbschalen bestehen, die zuerst in den äußeren Blechhalbschalen befestigt und anschließend zusammen verschweißt werden. Diese Ausführung erlaubt es, eine luftspaltisolierte Leitung aufzubauen.

Fig. 5 zeigt vergrößert eine gradierte poröse Struktur, die eine geschlossene Außenoberfläche besitzt.

## Patentansprüche

1. Abgasführende Vorrichtung eines Verbrennungsmotors mit innenliegender metallischer und/oder keramischer poröser Auskleidung
**dadurch gekennzeichnet,**
**dass** die poröse Auskleidung einen Gradienten der aktiven Oberfläche aufweist, so dass die aktive Oberfläche von außen nach innen abnimmt oder zunimmt.

2. Vorrichtung nach Anspruch 1
**dadurch gekennzeichnet,**
**dass** die poröse Auskleidung einen Gradienten des durch Makroporen gebildeten Porenvolumens aufweist, so dass das durch Makroporen gebildete Porenvolumen von außen nach innen zunimmt oder abnimmt.

3. Abgasführende Vorrichtung nach Anspruch 2
**dadurch gekennzeichnet,**
**dass** die poröse Auskleidung eine außenliegende Materialschicht in einer Dicke von mindestens 0,2 mm aufweist, die frei von Makroporen ist.

4. Abgasführende Vorrichtung nach Anspruch 2,
**dadurch gekennzeichnet,**
**dass** sich das mittlere Porenvolumen der Makroporen und/oder die aktive Oberfläche über die gesamte Länge des Gradienten um mindestens 20% ändert.

5. Vorrichtung nach einem der Ansprüche 1 bis 4
**dadurch gekennzeichnet,**
**dass** die Innenwand der abgasführenden Vorrichtung und die poröse Auskleidung eine Übergangsschicht bilden, in der die Poren der porösen Auskleidung teilweise durch das Material der Innenwand der abgasführenden Vorrichtung gefüllt sind.

6. Vorrichtung nach einem der Ansprüche 1 bis 4,
**dadurch gekennzeichnet,**
**dass** die Außenwand der porösen Auskleidung keine Poren aufweist und gasdicht ist.

7. Abgasführende Vorrichtung nach Anspruch 6,
**dadurch gekennzeichnet,**
**dass** zwischen der Außenwand der porösen Auskleidung und der Innenwand der abgasführenden Vorrichtung zumindest teilweise ein Luftspalt ausgebildet ist.

8. Abgasführende Vorrichtung nach Anspruch 7,
**dadurch gekennzeichnet,**
**dass** der überwiegende Teil der Außenwand der porösen Auskleidung durch einen Luftspalt von der Innenwand der gasführenden Vorrichtung getrennt ist.

9. Abgasführende Vorrichtung nach Anspruch 1,
**dadurch gekennzeichnet,**
**dass** die poröse Auskleidung einen offenporigen Metallschaum oder Metallschwamm umfasst.

10. Abgasführende Vorrichtung nach Anspruch 1,
**dadurch gekennzeichnet,**
**dass** die poröse Auskleidung aus mindestens zwei chemisch voneinander verschiedenen keramischen und/oder metallischen Materialien aufgebaut ist.

11. Abgasführende Vorrichtung nach Anspruch 1,
**dadurch gekennzeichnet,**
**dass** das außen liegende Material eine höhere spezifische thermische Leitfähigkeit aufweist als das innen liegende Material.

12. Abgasführende Vorrichtung nach Anspruch 7,
**dadurch gekennzeichnet,**
**dass** das außen liegende Material eine Beschichtung aus keramischem Material mit hoher aktiver Oberfläche aufweist.

13. Abgasführende Vorrichtung nach einem der vorangegangenen Ansprüche,
**dadurch gekennzeichnet,**
**dass** die Vorrichtung im Abgasstrang eines Kraftfahrzeuges vor einem Mehrwege-Abgaskatalysator angeordnet ist.

14. Verwendung einer abgasführenden Vorrichtung nach einem der vorangegangenen Ansprüche als Abgaskrümmer in Kraftfahrzeugen.

15. Verfahren zur Herstellung einer abgasführenden Vorrichtung eines Verbrennungsmotors,
**gekennzeichnet durch** die Schritte
- Herstellung eines porösen Formkerns, der einen Porositätsgradienten der mittleren Porengröße und der mittleren Porosität aufweist
- Umgießen des porösen Formkerns mit flüssigem Metall
- Ausbildung einer metallischen Außenfläche, die den porösen Formkern zum überwiegenden Teil gasdicht abschließt.

16. Verfahren zur Herstellung einer abgasführenden Vorrichtung eines Verbrennungsmotors,
**gekennzeichnet durch** die Schritte
- Übereinanderschichten mehrerer Materialschichten aus Metallschaum, Metallschwamm und/oder poröser Keramik um eine zentrale Achse, wobei die inneren Lagen eine höhere Porosität aufweisen als die äußeren Lagen
- Verbinden der einzelnen Materialschichten **durch** Löten Schweißen, oder Diffusionsschweißen zu einem porösen Formkörper
- Befestigung des porösen Formkörpers **durch** Kleben oder Schweißen in einem Abgasrohr.

17. Verfahren zur Herstellung einer abgasführenden Vorrichtung eines Verbrennungsmotors,
**gekennzeichnet durch** die Schritte
- Übereinanderschichten mehrerer Lagen aus Metallschaum, Metallschwamm und/oder poröser Keramik um eine zentrale Achse, wobei die inneren Lagen eine höhere Porosität aufweisen als die äußeren Lagen
- Versiegeln der äußersten Lagen mit einer Metallfolie, Metallband oder mit Sintermetallschlicker- oder paste
- Versintern und Ausbildung einer metallischen Außenfläche, die den porösen Formkern zum überwiegenden Teil gasdicht abschließt
- Befestigung des porösen Formkörpers **durch** Kleben oder Schweißen in einem Abgasrohr.

18. Verfahren nach einem der Ansprüche 15 bis 17,
**dadurch gekennzeichnet,**
**dass** zumindest die außenliegende Materialschicht des porösen Formkörpers aus poröser Keramik aufgebaut ist.

19. Verfahren nach Anspruch 18
**dadurch gekennzeichnet,**
**dass** zumindest die innerste Materialschicht aus porösem Metall aufgebaut ist.
